# EUROPÄISCHE PATENTSCHRIFT

(11) **EP 2 598 767 B1**
(45) Veröffentlichungstag und Bekanntmachung des Hinweises auf die Patenterteilung: **25.06.2014**
(21) Anmeldenummer: 11738700.1
(22) Anmeldetag: 27.07.2011
(51) Int. Cl.: F16D 66/02, F16D 66/00, F16D 65/56

(54) **BREMSVERSCHLEISSSENSOR EINER SCHEIBENBREMSE**
BRAKE WEAR SENSOR OF A DISK BRAKE
CAPTEUR D'USURE D'UN FREIN A DISQUE

(30) Priorität: 28.07.2010 DE 102010032515
(43) Veröffentlichungstag der Anmeldung: 05.06.2013
(73) Patentinhaber: KNORR-BREMSE Systeme für Nutzfahrzeuge GmbH, 80809 München (DE)
(72) Erfinder: HELF, Anton, 83139 Söchtenau (DE)
(74) Vertreter: Schönmann, Kurt
(86) Internationale Anmeldenummer: PCT/EP2011/062900
(87) Internationale Veröffentlichungsnummer: WO 2012/013702

(56) Entgegenhaltungen:
- DE-A1- 4 017 950
- US-A- 3 830 343
- US-A- 6 129 183
- US-A1- 2006 149 440

## Beschreibung

Die Erfindung betrifft einen Bremsverschleißsensor einer Scheibenbremse nach dem Oberbegriff des Anspruchs 1. Die Erfindung bezieht sich auch auf ein Verfahren zur Zuordnung eines Messsignals eines solchen Bremsverschleißsensors.

Scheibenbremsen sind in unterschiedlicher Bauweise bekannt und sind oftmals mit einem Sensor zur Ermittlung eines Verschteißes der Bremsbeläge und Bremsscheiben ausgerüstet. Ein derartiger, beispielsweise aus DE 42 12 407 A1 bekannter Bremsverschleißsensor weist in einer Ausführung ein Potentiometer auf, welches über ein Planetengetriebe verstellbar ist. Das Planetengetriebe ist dabei mit einer Nachstellvorrichtung gekoppelt, deren Nachstellweg als Verdrehwinkel auf das Planetengetriebe übertragen wird. Das Potentiometer kann schon mit einer integrierten Elektronik zur Messsignalaufbereitung versehen sein.

Solche Bremsverschleißsensoren haben sich bestens bewährt. Bei der ständig wachsenden Automatisierung und Überwachung von Bremsen und Bremsvorgängen besteht der Bedarf, weitere Kenngrößen zu erfassen. Dies kann zum Beispiel der Hub eines Bremsdrehhebels einer solchen Scheibenbremse sein. Zur Sensierung jeder weiteren Kenngröße ist jedoch in der Regel ein zusätzlicher Sensor mit entsprechendem Bauraum und den damit verbundenen Installationskosten inklusive Bauteileaufwand erforderlich.
Aus DE 40 17 950 ist ferner eine Vorrichtung bekannt, die mit einem Sensor den Bremsverschleiß und den Bremsschub überwacht.

>

Es ist daher die Aufgabe der vorliegenden Erfindung, einen verbesserten Bremsverschleißsensor zu schaffen.

Die Aufgabe wird durch einen Bremsverschleißsensor mit den Merkmalen des Anspruchs 1 und durch ein Verfahren mit den Merkmalen des Anspruchs 7 gelöst.

Eine Idee der Erfindung besteht darin, einen Bremsverschleißsensor zur Erfassung von mindestens zwei unterschiedlichen Eingangs- oder Kenngrößen auszubilden.

Demgemäß weist ein Bremsverschleißsensor einer Scheibenbremse: die Merkmale des Anspruchs 1 auf.

Durch den Zusatzeingang an dem Bremsverschleißsensor können einerseits die meisten vorhandenen Bauteile verwendet werden. Außerdem bedeutet dies, dass zur Erfassung einer weiteren Kenngröße oder auch mehrerer kein weiter Sensor mit kostenaufwändiger Elektronik erforderlich wird. Lediglich durch eine geänderte Anordnung der vorhandenen Bauteile im Sensor und durch Hinzufügen einer weiteren Antriebsmöglichkeit an dem vorhandenen Getriebe kann das mindestens eine zusätzliche Messsignal erzeugt werden.

Dabei wird das vorhandene Getriebe mit dem mindestens einen Zusatzeingang erweitert, wodurch es zusätzlich durch diesen Zusatzeingang verstellbar ist. Dazu sind nur wenige Änderungen bzw. Ergänzungen notwendig, die den vorhandenen Bauraum nicht wesentlich vergrößern. Ein zusätzlicher Sensor für die zusätzliche Kenngröße ist nicht erforderlich.

In einer Ausführung ist der mindestens eine Zusatzeingang über ein Zusatzantriebsgetriebe mit dem Getriebe gekoppelt. Das kann in einer einfachen Ausführung ein Stirnradgetriebe sein, wobei ein Zusatzantriebselement dieses Stirnrad aufweist, das mit einer Verzahnung oder einer zusätzlichen Verzahnung eines Getrieberades in Eingriff steht. Auch ein Schneckengetriebe, Kegelradgetriebe, eine Koppelstange, ein Stößel oder ein Nockengetriebe sind einzeln oder auch in Kombination mit entsprechenden korrespondierenden Gegenstücken an dem Getriebe dazu möglich. Sinnvollerweise kann der Sensor durch die Kraft einer Rückstellfeder in Ruhelage gegen einen Anschlag gedrückt werden.

Erfindungsgemäss ist das Getriebe des Bremsverschleißsensors, das mit der Sensoreinheit zusammenwirkt, ein Planetengetriebe ist. Dabei ist es in einfacher Weise möglich, dass zum Beispiel ein Planetenträgerrad mit einem Antriebsabschnitt versehen ist, welcher einen Teil des Zusatzantriebsgetriebes bildet. Beispielsweise kann dies eine Außenverzahnung oder eine Innenverzahnung sein.

Die Sensoreinheit kann ein Potentiometer aufweisen; selbstverständlich auch eine elektronische Einrichtung zur Bearbeitung und Aufbereitung bzw. Auswertung von Messsignalen.

Die Sensoreinheit kann auch einen induktiven oder/und kapazitiven Aufnehmer allein oder in Kombination mit anderen Aufnehmern aufweisen. Dabei kann eine elektronische Einrichtung in der Sensoreinheit zum Beispiel die Messsignale an eine Weiterverarbeitung entsprechend anpassen, z.B. digitalisieren. Induktive und kapazitive Aufnehmer bieten außerdem den Vorteil einer berührungs- und somit reibungslosen Betätigung und sind ferner wartungsfrei.

Ein Verfahren zum Zuordnen eines Messsignals eines Bremsverschleißsensors einer Scheibenbremse zu einem von mindestens zwei unterschiedlichen Eingangs- oder Kenngrößen des Bremsverschleißsensors ist dadurch gekennzeichnet, dass das Messsignal in Abhängigkeit von unterschiedlichen Betriebszuständen der Scheibenbremse jeweils einer der mindestens zwei unterschiedlichen Eingangs- oder Kenngrößen des Bremsverschleißsensors zugeordnet wird, wobei der Bremsverschleißsensor ein Bremsverschleißsensor nach einem der vorherigen Ansprüche ist.

Dazu kann eine Auswerteeinrichtung zum Beispiel in einem Bremssteuergerät integriert oder auch separat angeordnet sein, welche vorhandene Signale und Daten der Bremsanlage über den jeweiligen Zustand empfängt und zur Auswertung der Messsignale des Bremsverschleißsensors mit auswertet.

Eine Scheibenbremse weist den oben beschriebenen Bremsverschleißsensor auf.

Die Erfindung wird nun anhand eines Ausführungsbeispiels mit Bezug auf die beigefügten Zeichnungen näher erläutert. Hierbei zeigt:
- Fig. 1: eine schematische perspektivische Ansicht eines geöffneten Bremsverschleißsensors nach dem Stand der Technik;
- Fig. 2: eine schematische perspektivische Ansicht eines geöffneten erfindungsgemäßen Bremsverschleißsensors;
- Fig. 3: eine schematische perspektivische Explosionsansicht eines Planetengetriebes mit einer Sensoreinheit des erfindungsgemäßen Bremsverschleißsensors nach Fig. 2;
- Fig. 4: eine perspektivische Schnittdarstellung gemäß Linie IV-IV des erfindungsgemäßen Bremsverschleißsensors nach Fig. 2;
- Fig. 5: eine schematische Schnittansicht des Getriebes nach Fig. 4; und
- Fig. 6: eine schematische Kennliniendarstellung des erfindungsgemäßen Bremsverschleißsensors nach Fig. 2.

Gleiche Bauelemente bzw. Funktionseinheiten mit gleicher Funktion sind mit gleichen Bezugszeichen in den Figuren gekennzeichnet.

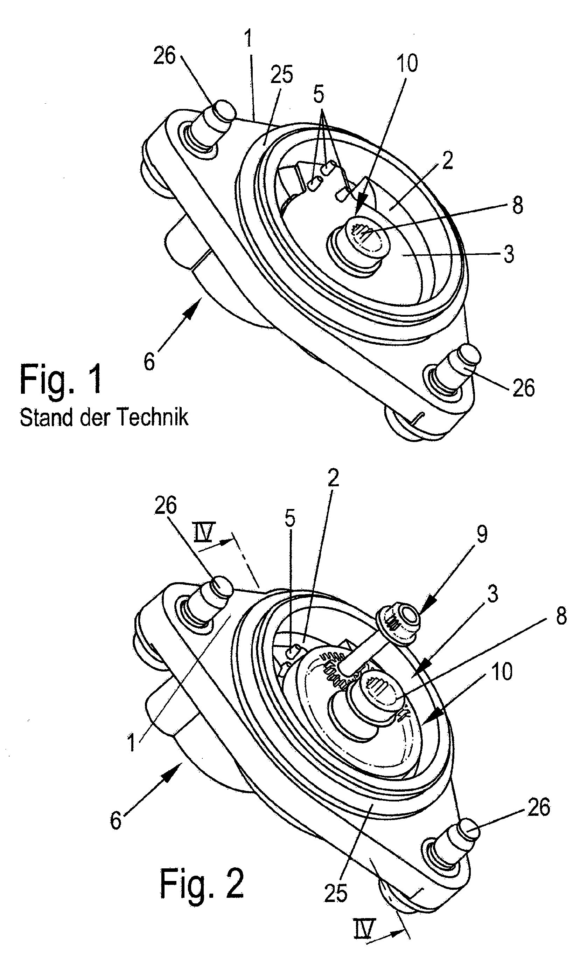

Fig. 1 zeigt eine schematische perspektivische Ansicht eines geöffneten Bremsverschleißsensors nach dem Stand der Technik.

Der herkömmliche Bremsverschleißsensor weist ein Gehäuse 1 auf, in welchem eine zylinderartige Kammer 2 eingeformt ist, die eine Sensoreinheit 3 aufnimmt. Diese Kammer 2 ist im Betrieb mit einem Abschlussdeckel, der hier nicht gezeigt ist versehen, der die Sensorbauteile fixiert. Das Gehäuse 1 ist hier mit einer Befestigungsseite gezeigt, welche an der Bremse, z.B. an einem Bremssattel, angebracht und mit einer Dichtung 25, z.B. ein O-Ring, abgedichtet wird. Zur Befestigung dienen Befestigungselemente 26, z. B. Schrauben, welche in laschenartigen Erweiterungen des Gehäuses 1 angeordnet sind. Auf der der Befestigungsseite gegenüberliegenden Seite ist ein Anschlussabschnitt 6 zur Aufnahme eines Steckers für einen elektrischen Anschluss an Kontaktstiften 5, die mit der Sensoreinheit 3 in Verbindung stehen. Die Sensoreinheit 3 weist einen Aufnehmer auf, welcher eine mechanische Größe in eine elektrische Größe umsetzt. Dies ist hier ein veränderlicher elektrischer Widerstand in Form eines Potentiometers, welches zusätzliche Elektronik besitzen kann und durch ein Getriebe 10, hier ein Planetengetriebe, über ein zentrales Antriebselement 8 in Abhängigkeit von einem Bremsverschleiß (Bremsbelag- und Bremsscheibenverschleiß) einer zugeordneten Scheibenbremse verstellbar ist. Das zentrale Antriebselement 8 kann dazu direkt oder indirekt, z. B. über ein weiteres angepasstes Getriebe, mit einer Bremsennachstellvorrichtung gekoppelt sein. Die Nachstellvorrichtung stellt in Abhängigkeit von einem Bremsverschleiß den oder die Bremsbeläge der zugeordneten Bremse nach, indem eine Verdrehung in eine lineare Nachstellbewegung umgesetzt wird. Die Verdrehung erfolgt bei einer Bremsung, z.B. mittels eines Bremsdrehhebels, wenn ein vorbestimmter Wert überschritten wird. Ein Verdrehwinkel der Verdrehung dieser Nachstellvorrichtung entspricht so einem Maß eines Bremsverschleißes in einer Längeneinheit, z.B. mm. Der Verdrehwinkel wird mittels des Planetengetriebes auf das Potentiometer übertragen, welches seinerseits den Verdrehwinkel in einen elektrischen Widerstandswert umsetzt. Der elektrische Widerstand kann mit einer elektrischen Spannung oder einem elektrischen Strom gemessen werden, wobei diese Spannung oder/und der Strom ein Abbild des Verdrehwinkels, der Längeneinheit einer Nachstellung und somit der Messgröße des Bremsverschleißes bilden.

In Fig. 2 ist eine schematische perspektivische Ansicht eines geöffneten erfindungsgemäßen Bremsverschleißsensors dargestellt.

Im Gegensatz zu dem Bremsverschleißsensor nach dem Stand der Technik gemäß Fig. 1 weist der erfindungsgemäße Bremsverschleißsensor zusätzlich zu dem zentralen Antriebselement 8 für eine erste Eingangs- oder Kenngröße ein Zusatzantriebselement 22 als Zusatzeingang 9 zur Erfassung einer zweiten, zusätzlichen Eingangs- oder Kenngröße. Die erste Eingangsgröße ist dabei der Bremsverschleiß und die zusätzliche Eingangsgröße eine weitere Kenngröße, z.B. der Hebelhub eines Bremsdrehhebels, welcher bei einem Bremsvorgang zum Zuspannen der Bremse bzw. des Bremsbelags oder der Bremsbeläge verschwenkt wird und dabei auch die Nachstellvorrichtung verstellt, wenn der vorbestimmte Wert überschritten wird.

Das Zusatzantriebselement 22 als Zusatzeingang 9 wirkt dabei auch wie das zentrale Antriebselement 8 mit dem Getriebe 10 zusammen und bildet eine zusätzliche Verstellmöglichkeit desselben und somit des Aufnehmers der Sensoreinheit 3.

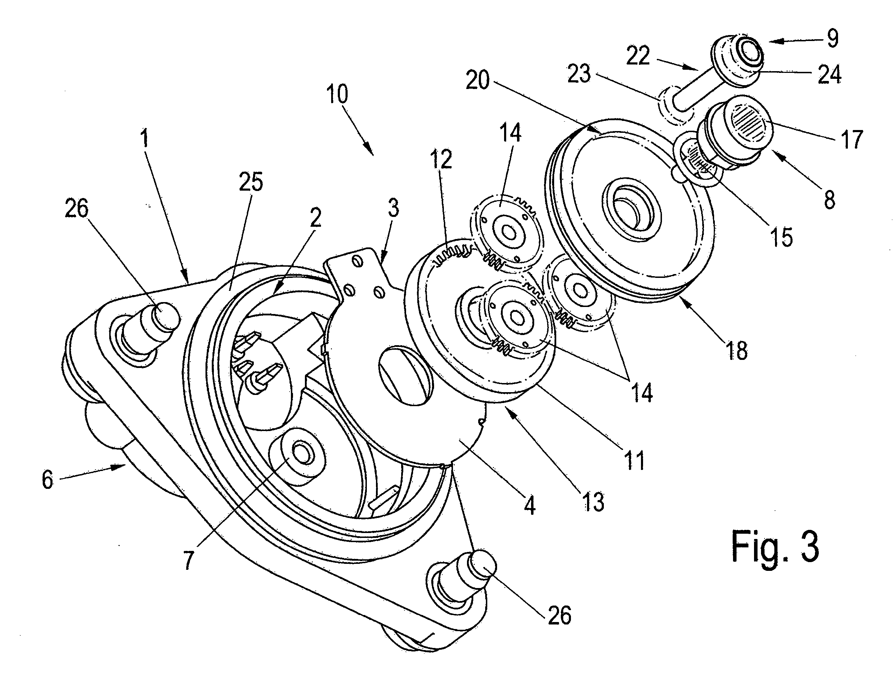

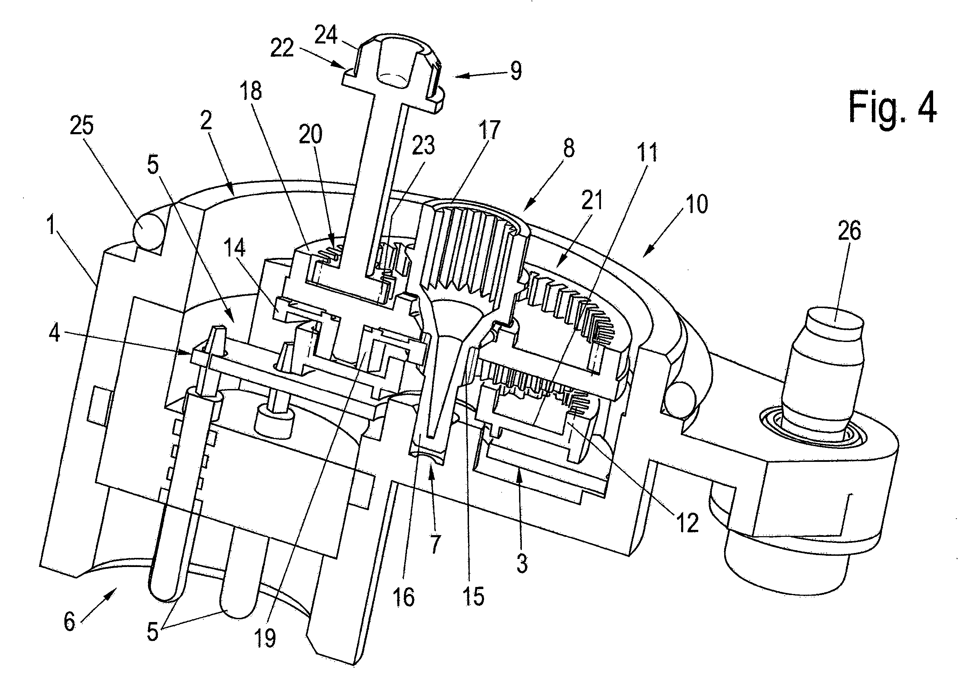

Fig. 3 zeigt eine schematische perspektivische Explosionsansicht des Getriebes 10 als Planetengetriebe mit Sensoreinheit 3 des erfindungsgemäßen Bremsverschleißsensors nach Fig. 2, und Fig. 4 stellt dazu eine perspektivische Schnittdarstellung gemäß Linie IV-IV des erfindungsgemäßen Bremsverschleißsensors nach Fig. 2 dar.

Die Begriffe "unten" und "Unterseite" bezeichnen hier die Richtung zum Boden der Kammer 2 des Gehäuses 1 und die Begriffe "oben" und "Oberseite" die Gegenrichtung dazu.

Die Sensoreinheit 3 besteht hier aus einer Platine 4, welche verdrehsicher (in der Figur sind dazu Nasen in der Kammerwand und an der Platine sowie korrespondierend Ausnehmungen angedeutet) in der Kammer 2 des Gehäuses 1 auf dessen Boden angeordnet und mit einer Lasche versehen ist, die zur Verbindung, z.B. über Schneidverbindungen, mit den Kontakten 5 dient. Der Boden der Kammer 2 ist zentral mit einem domartigen, zylinderförmigen Lagerabschnitt 7 versehen, welcher zentral eine Aufnahme für das zentrale Antriebselement 8 bildet. Die Platine 4 weist eine an die Außenkontur des Lagerabschnitts 7 angepasste Durchgangsöffnung auf, durch welche sich der Lagerabschnitt 7 im zusammengebauten Zustand erstreckt (Fig. 4). Auf dieser Platine 4 sind zum Beispiel auf der Oberseite eine Widerstandsbahn (nicht dargestellt) oder mehrere und eine Kontaktbahn, welche elektrisch mit den Kontakten 5 und/oder elektronischen Bauelementen verbunden sind. Die Widerstandsbahn und die Kontaktbahn bilden mit einem Betätigungsabschnitt 13 des Planetengetriebes ein Potentiometer. Der Betätigungsabschnitt 13 kann zum Beispiel ein Schleifkontakt sein und ist hier an der Unterseite eines Hohlrads 11 des Planetengetriebes angebracht.

Das Planetengetriebe umfasst das Hohlrad 11 mit einer Innenverzahnung 12, drei Planetenräder 14 mit Außenverzahnung, einem Planetenträgerrad 18 und einem Sonnenrad 15 mit einer Außenverzahnung, welches mit dem zentralen Antriebselement 8 gekoppelt ist. Das Hohlrad 11, der Betätigungsabschnitt 13, das Planetenträgerrad 18 und das Sonnenrad 15 sind zusammen mit dem Potentiometer bzw. dem Aufnehmer koaxial angeordnet.

Das Hohlrad 11 ist mit dem Betätigungsabschnitt 13 über der Platine 4 angeordnet, wie aus Fig. 4 ersichtlich ist. Seine Innenverzahnung 12 steht in Eingriff mit den Planetenrädern 14, welche über Planetenlager 19 drehbar an der Unterseite des Planetenträgerrads 18 angebracht sind. Die Planetenlager 19 bestehen hier aus Zapfen der Unterseite des Planetenträgerrads 18, auf welchen die Planetenräder 14 drehbar aufgesetzt sind. In der Mitte zwischen den Planetenrädern 14 ist das Sonnenrad 15 mit diesen in Eingriff stehend angeordnet. Das Sonnenrad 15 ist Bestandteil des zentralen Antriebselementes 8, welches aus einem Schaft gebildet ist, der in etwa in der Mitte das Sonnerad 15 aufweist, sich im zusammengebauten Zustand des Planetengetriebes (Fig. 4) von oben durch eine Öffnung des Planetenträgers 18 hindurch erstreckt und mit einem unteren Lagerende 16 in der Aufnahme des Lagerabschnitts 7 des Gehäuses 1 drehbar aufgenommen ist. Das andere Ende des zentralen Antriebselementes 8 ist radial erweitert und zu einem Antriebsende 18 mit einer Innenverzahnung bzw. einem Innenprofil ausgebildet.

Das Planetenträgerrad 18 weist an seiner Oberseite an seinem umlaufenden Rand einen Antriebsabschnitt 10 auf, mit welchem das Zusatzantriebselement 22 über ein Zusatzantriebsgetriebe 21 in Wirkverbindung steht. In diesem Beispiel ist das Zusatzantriebsgetriebe 21 als Zahnradgetriebe ausgebildet, wobei der Antriebsabschnitt 10 des Planetenträgerrads 18 mit einer Innenverzahnung versehen ist, die mit einer Außenverzahnung eines Abtriebsrads 23 des Zusatzantriebselementes 22 in Eingriff ist. Dabei ist das Zusatzantriebselement 22 eine Welle, deren unteres Ende das Abtriebsrad 23 aufweist, und deren oberes Ende als Zusatzeingang 9 mit einem Antriebsrad 24 versehen ist, das hier eine Außenverzahnung besitzt. Das Zusatzantriebselement 22 ist hier so angeordnet, dass seine Längsachse in einem Abstand parallel zu der Achse des Planetengetriebes verläuft.

Es ist in diesem Ausführungsbeispiel vorgesehen, dass das Antriebsrad 24 des Zusatzantriebselementes 22 direkt oder indirekt über ein weiteres Getriebe mit dem Bremsdrehhebel der zugeordneten Scheibenbremse in Wirkverbindung steht. Damit ist die zweite Eingangs- oder Kenngröße am Zusatzeingang 9 des Bremsverschleißsensors die Schwenk- oder Hubbewegung des Bremsdrehhebels. Das Zusatzantriebselement 22 kann zum Beispiel in dem nicht gezeigten Abschlussdeckel der Kammer 2 des Gehäuses 1 um seine Längsachse drehbar gelagert sein.

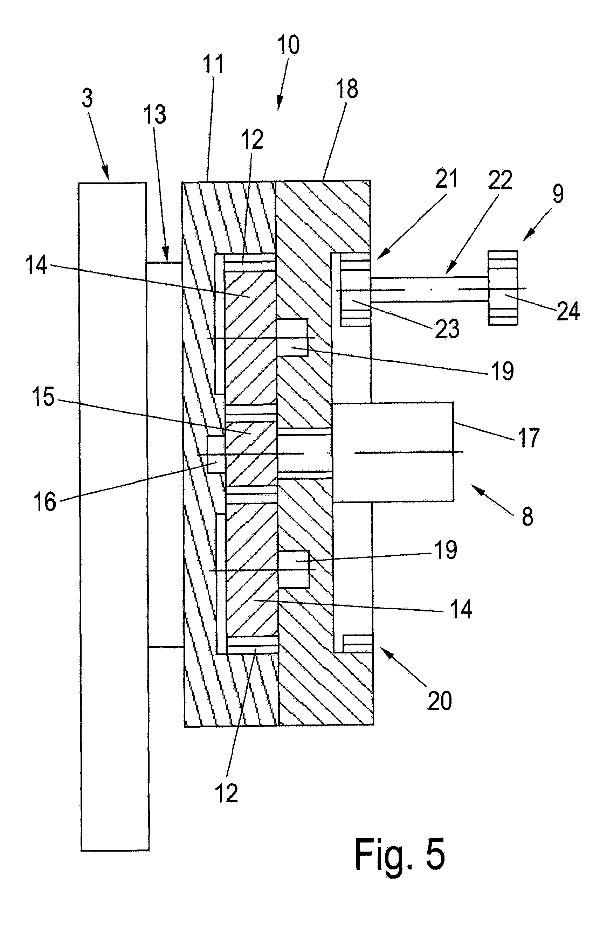

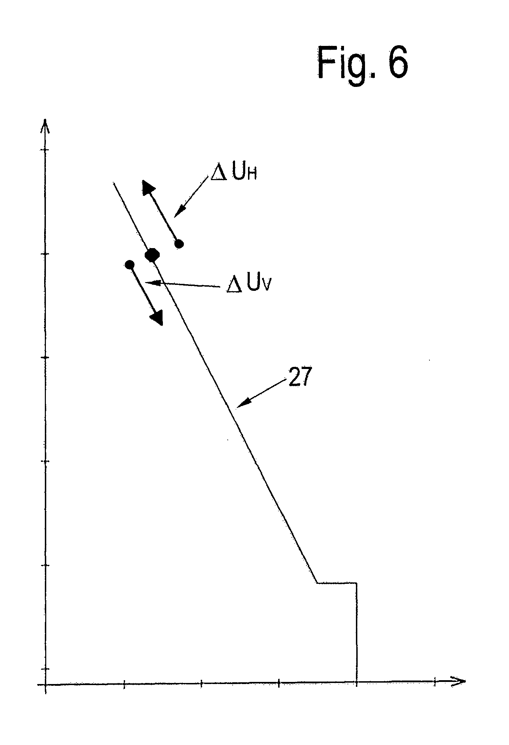

Zur Erläuterung der Einwirkung der zwei Eingangs- oder Kenngrößen auf den Bremsverschleißsensor zeigt Fig. 5 eine schematische Schnittansicht des Getriebes nach Fig. 4. Fig. 6, welche eine schematische Kennliniendarstellung des erfindungsgemäßen Bremsverschleißsensors nach Fig. 2 zeigt, wird in diesem Zusammenhang mit erläutert.

In Fig. 5 ist eine Variante der Planetenlager 19 gezeigt, wobei die Planetenräder 14 jeweils einen Lagerzapfen aufweisen, der in einer Lageraufnahme des Planetenträgerrads 14 drehbar aufgenommen ist. Die Planetenräder 14 sind einstufig dargestellt. Sie können selbstverständlich zwei- oder auch mehrstufig ausgeführt sein. Zur Festlegung der Drehrichtungen des zentralen Antriebselementes 8 und des Zusatzantriebselementes 22 wird das Planetengetriebe von der Oberseite (in Fig. 5 von rechts) betrachtet.

Bei einer Beaufschlagung des zentralen Antriebselementes 8 mit einer Drehbewegung im Uhrzeigersinn nur der ersten Eingangs- oder Kenngröße, z.B. einer Verschleißnachstellung, wird in diesem ersten Fall angenommen, dass das Planetenträgerrad 18 festgehalten ist. Das Sonnenrad 15 dreht die Planetenräder 14 über die Verzahnung gegen den Uhrzeigersinn. Damit ergibt sich dann eine Verdrehung des Hohlrads 11 über dessen mit den Planetenrädern 14 in Eingriff stehende Innenverzahnung 12 ebenfalls im Gegenuhrzeigersinn. Diese Drehbewegung wird über den Betätigungsabschnitt 13 auf das Potentiometer der Sensoreinheit 3 übertragen. Dadurch verändert sich der über den Schleifer des Betätigungsabschnitts 13 abgegriffene Widerstand des Potentiometers, das in einer nicht näher beschriebenen Schaltung mit einer elektrischen Spannung beaufschlagt ist, derart, dass eine in diesem Beispiel an dem Schleifer gemessene elektrische Spannung erhöht wird.

Fig. 6 zeigt eine Sensorkennlinie 27, welche einen Zusammenhang einer an der Sensoreinheit 3 gemessenen Spannung (Abszisse) und einem Verschleißweg bzw. Hub (Ordinate) darstellt. Eine Erhöhung der Spannung aufgrund der ersten Eingangs- oder Kenngröße ergibt ausgehend von einem auf der Sensorkennlinie 27 durch einen Kreis markierten Ausgangswert, dass sich dieser in Richtung des Pfeils ΔU_{V} verschiebt. Ein damit korrespondierender Verschleißwert ergibt sich auf der Ordinate.

Wird der Bremsverschleißsensor nun in einem zweiten Fall nur durch die zweite Eingangs- oder Kenngröße, zum Beispiel als Hub des Bremsdrehhebels, über den Zusatzeingang 9 mit einer Drehbewegung auch im Uhrzeigersinn beaufschlagt und das Sonnenrad 15 bzw. das zentrale Antriebselement 8 dabei festgehalten, so dreht sich das Planetenträgerrad 18 auch im Uhrzeigersinn und erzeugt damit eine Drehbewegung der Planetenräder 14 um das feststehende Sonnenrad 15. Dadurch wird das Hohlrad 11 ebenfalls zu einer Drehbewegung im Uhrzeigersinn veranlasst.

Somit wird in diesem zweiten Fall die Drehrichtung des Betätigungsabschnitts 13 für das Potentiometer umgekehrt und der Ausgangspunkt auf der Sensorkennlinie 27 verschiebt sich auf dieser in Richtung des Pfeils ΔU_{H} nach oben, da die gemessene Spannung erniedrigt wird. Der zugehörige Hub des Bremsdrehhebels (ausgehend vom Ausgangspunkt) kann ebenfalls auf der Ordinate ermittelt werden.

In einem dritten Fall wird eine gleichzeitige Beaufschlagung des Bremsverschleißsensors mit der ersten und zweiten Eingangs- oder Kenngröße mit gleichen Drehrichtungen betrachtet. Dabei ergibt sich eine Differenzbewegung des Betätigungsabschnitts 13.

Und in einem vierten Fall, der einen Sonderfall des dritten Falls darstellt, wird die zweite Eingangs- oder Kenngröße wieder in ihre Ausgangslage zurück gestellt. Dies ist bei dem Bremsdrehhebelhub gegeben. Bei Beginn einer Bremsung schwenkt der Bremsdrehhebel aus seiner Ruhelage in eine ausgelenkte Lage und am Ende der Bremsung wieder zurück in seine Ruhelage. Die dadurch ausgelöste Nachstellbewegung als erste Eingangs- oder Kenngröße verbleibt jedoch in der neuen Position.

Daraus ergibt sich, dass die durch die eine Sensoreinheit 3 ausgegebenen mehrere Messsignale der zwei unterschiedlichen Eingangs- oder Kenngrößen durch eine geeignete Auswertung anhand von Randbedingungen diesen zwei unterschiedlichen Eingangs- oder Kenngrößen zugeordnet werden können. Diese Randbedingungen werden aus dem Betriebszustand der Bremse, z. B. anhand von Informationen einer ihr zugeordneten Bremssteuerung, erhalten. Im nicht betätigten Zustand der Bremse ist das durch den Bremsverschleißsensor ausgegebene Messsignal ein Maß für die Nachstellung und somit für den Verschleiß. Bei einer Bremsbetätigung wird das Messsignal dem Hub des Bremsdrehhebels zugeordnet. Der normale Hub des Bremsdrehhebels kann vorher in einen Speicher einer Auswerteelektronik eingespeichert sein. Abweichungen von diesem gespeicherten "Normalwert" bei einer Bremsbetätigung können dann nach Ende der Bremsung anhand eines dann veränderten Verschleißwertes als ausgeführte Verschleißnachstellung von anderen Abweichungen ohne veränderten Verschleißwert unterschieden werden.

Somit sind sowohl statische als auch dynamische Messsignale der zwei Eingangs- oder Kenngrößen mit dem nur einen Bremsverschleißsensor ausgebbar.

Der Verschleißmesswert kann weiterhin mit einem vorgebbaren Grenzwert verglichen werden, um so eine Auswechselanzeige für Bremsbeläge und/oder Bremsscheibe zu erzeugen.

Das statische oder dynamische Messsignal des Hubs des Bremsdrehhebels kann z.B. zusammen mit einer Auswertung einer Bremsverzögerung des Fahrzeugs in Zusammenhang gebracht werden, um ein Bremsverhalten zu beurteilen bzw. Abweichungen von einem normalen Bremsverhalten zu erkennen.

Die Erfindung ist nicht auf die oben beschriebenen Ausführungsbeispiele beschränkt. Sie ist im Rahmen der beigefügten Ansprüche modifizierbar.

In gleicher Weise wie oben für eine Potentiometerausführung mit Schleifer der Sensoreinheit 3 beschrieben lässt sich dieses Prinzip auch für eine kontaktlose Variante verwenden, welche darüber hinaus Vorteile, z.B. Wartungs- und Reibungsfreiheit, bietet. Eine solche kontaktlose Variante kann induktive oder/und kapazitive Aufnehmer mit analoger oder/und digitaler Ausgabe von Messsignalen umfassen.

Das Zusatzantriebsgetriebe 21 zur Übertragung der zweiten Eingangs- oder Kenngröße (hier der Hub des Bremsdrehhebels) auf den Bremsverschleißsensor kann anstelle der gezeigten Ausführung mit Stirnradverzahnung auch mit einem Schnecken- oder Kegelradgetriebe, einer Koppelstange oder mittels Stößel ausgebildet sein. Auch eine Nockenbetätigung ist denkbar. Sinnvollerweise wird der Sensor durch die Kraft einer Rückstellfeder in Ruhelage gegen einen Anschlag gedrückt.

Es sind auch mehr Zusatzantriebselemente für mehr als eine zusätzliche Eingangs- oder Kenngröße vorstellbar.

### Bezugszeichenliste

- 1: Gehäuse
- 2: Kammer
- 3: Sensoreinheit
- 4: Platine
- 5: Kontaktstift
- 6: Anschlussabschnitt
- 7: Lagerabschnitt
- 8: Zentrales Antriebselement
- 9: Zusatzeingang
- 10: Getriebe
- 11: Hohlrad
- 12: Innenverzahnung
- 13: Betätigungsabschnitt
- 14: Planetenrad
- 15: Sonnenrad
- 16: Lagerende
- 17: Antriebsende
- 18: Planetenträgerrad
- 19: Planetenlager
- 20: Antriebsabschnitt
- 21: Zusatzantriebsgetriebe
- 22: Zusatzantriebselement
- 23: Abtriebsrad
- 24: Antriebsrad
- 25: Dichtung
- 26: Befestigungselement
- 27: Sensorkennlinie

## Patentansprüche

1. Bremsverschleißsensor für eine Scheibenbremse, mit:
a. einer Sensoreinheit (3);
b. einem mit der Sensoreinheit (3) zusammenwirkenden Getriebe (10); und
c. einem zentralen Antriebselement (8), welches mit dem Getriebe (10) in Eingriff steht, und welches einen Eingang für eine einem Bremsverschleiß zugeordnete Eingangs- oder Kenngröße darstellt;
d. wobei der Bremsverschleißsensor mindestens einen Zusatzeingang (9) für eine weitere Eingangs- oder Kenngröße aufweist,
e. wobei der mindestens eine Zusatzeingang (9) mit dem Getriebe (10) in Zusammenwirkung steht,
**dadurch gekennzeichnet, dass**
f. das Getriebe (10) ein Planetengetriebe ist.

2. Bremsverschleißsensor nach Anspruch 1, **dadurch gekennzeichnet, dass** der mindestens eine Zusatzeingang (9) über ein Zusatzantriebsgetriebe (21) mit dem Getriebe (10) gekoppelt ist.

3. Bremsverschleißsensor nach Anspruch 2, **dadurch gekennzeichnet, dass** das Zusatzantriebsgetriebe (21) als Stirnradgetriebe, Schneckengetriebe, Kegelradgetriebe, Koppelstange, Stößel oder Nockengetriebe ausgebildet ist.

4. Bremsverschleißsensor nach einem der vorhergehenden Ansprüche, **dadurch gekennzeichnet, dass** das Zusatzantriebsgetriebe (21) mit einem Planetenträgerrad (18) des Planetengetriebes gekoppelt ist.

5. Bremsverschleißsensor nach einem der vorhergehenden Ansprüche, **dadurch gekennzeichnet, dass** die Sensoreinheit (3) ein Potentiometer aufweist.

6. Bremsverschleißsensor nach einem der vorhergehenden Ansprüche, **dadurch gekennzeichnet, dass** die Sensoreinheit (3) einen induktiven oder/und kapazitiven Aufnehmer aufweist.

7. Verfahren zum Zuordnen eines Messsignals eines Bremsverschleißsensors für eine Scheibenbremse zu einem von mindestens zwei unterschiedlichen Eingangs- oder Kenngrößen des Bremsverschleißsensors, **dadurch gekennzeichnet, dass** das Messsignal in Abhängigkeit von unterschiedlichen Betriebszuständen der Scheibenbremse jeweils einer der mindestens zwei unterschiedlichen Eingangs- oder Kenngrößen des Bremsverschleißsensors zugeordnet wird, wobei der Bremsverschleißsensor ein Bremsverschleißsensor nach einem der vorherigen Ansprüche ist.

8. Scheibenbremse mit einem Bremsverschleißsensor nach einem der Ansprüche 1 bis 6.

## Claims

1. Brake wear sensor for a disc brake, comprising:
a. a sensor unit (3);
b. a gear mechanism (10) acting together with the sensor unit (3); and
c. a central drive element (8), which is in engagement with the gear mechanism (10) and which represents an input for an input variable or a characteristic variable associated with brake wear;
d. wherein the brake wear sensor has at least one additional input (9) for a further input variable or characteristic variable,
e. wherein the at least one additional input (9) acts together with the gear mechanism (10),
**characterised in that**
f. the gear mechanism (10) is a planetary gear mechanism.

2. Brake wear sensor according to claim 1, **characterised in that** the at least one additional input (9) is coupled to the gear mechanism (10) by an additional drive mechanism (21).

3. Brake wear sensor according to claim 2, **characterised in that** the additional drive mechanism (21) is designed as a spur gear mechanism, a worm gear mechanism, a bevel gear mechanism, a coupling rod, a tappet or a cam gear mechanism.

4. Brake wear sensor according to any of the preceding claims, **characterised in that** the additional drive mechanism (21) is coupled to a planet carrier (18) of the planetary gear mechanism.

5. Brake wear sensor according to any of the preceding claims, **characterised in that** the sensor unit (3) has a potentiometer.

6. Brake wear sensor according to any of the preceding claims, **characterised in that** the sensor unit (3) has an inductive and/or capacitive pick-up.

7. Method for assigning a measurement signal of a brake wear sensor of a disc brake to one of at least two different input variables or characteristic variables of the brake wear sensor, **characterised in that** the measurement signal is assigned to one of the at least two different input variables or characteristic variables of the brake wear sensor respectively, depending on different operating states of the disc brake, wherein the brake wear sensor is a brake wear sensor according to any of the preceding claims.

8. Disc brake having a brake wear sensor according to any of claims 1 to 6.

## Revendications

1. Capteur d'usure d'un frein à disque, comprenant:
a. une unité (3) formant capteur ;
b. un engrenage (10) coopérant avec l'unité (3) formant capteur ; et
c. un élément (8) central d'entraînement qui engrène avec l'engrenage (10) et qui représente une entrée pour une grandeur d'entrée ou une grandeur de sortie associée à une usure de frein ;
d. dans lequel le capteur d'usure de frein a au moins une entrée (9) supplémentaire pour une autre grandeur d'entrée ou caractéristique,
e. dans lequel la au moins une entrée (9) supplémentaire est en coopération avec l'engrenage (10),
**caractérisé en ce que**
f. l'engrenage (10) est un engrenage planétaire.

2. Capteur d'usure d'un frein suivant la revendication 1, **caractérisé en ce que** la au moins une entrée (9) supplémentaire est couplée à l'engrenage (10) par une transmission (21) menante supplémentaire.

3. Capteur d'usure d'un frein suivant la revendication 2, **caractérisé en ce que** la transmission (21) menante supplémentaire est constituée sous la forme d'un engrenage cylindrique, d'un engrenage à vis sans fin, d'un engrenage conique, d'un système de barres articulées, d'un coulisseau ou d'un engrenage à came.

4. Capteur d'usure d'un frein suivant l'une des revendications précédentes, **caractérisé en ce que** la transmission (21) menante supplémentaire est couplée à un porte-satellite (18) de l'engrenage planétaire.

5. Capteur d'usure d'un frein suivant l'une des revendications précédentes, **caractérisé en ce que** l'unité (3) formant capteur a un potentiomètre.

6. Capteur d'usure d'un frein suivant l'une des revendications précédentes, **caractérisé en ce que** l'unité (3) formant capteur a un récepteur inductif ou/et capacitif.

7. Procédé d'affectation d'un signal de mesure d'un capteur d'usure d'un frein à disque à l'une d'au moins deux grandeurs d'entrée ou caractéristiques différentes du capteur d'usure d'un frein, **caractérisé en ce que** l'on affecte le signal de mesure en fonction d'états de fonctionnement différents du frein à disque respectivement à l'une des au moins deux grandeurs d'entrée ou caractéristiques différentes du capteur d'usure d'un frein, le capteur d'usure d'un frein étant un capteur d'usure d'un frein suivant l'une des revendications précédentes.

8. Frein à disque ayant un capteur d'usure d'un frein suivant l'une des revendications 1 à 6.
